# FASCICULE DE BREVET EUROPEEN

(11) **EP 1 534 983 B1**
(45) Date de publication et mention de la délivrance du brevet: **12.08.2009**
(21) Numéro de dépôt: 03769532.7
(22) Date de dépôt: 28.08.2003
(51) Int. Cl.: F16L 1/00

(54) **MOYENS DE CONNEXION DE CONDUITS POUR FLUIDES HAUTE PRESSION**
VERBINDUNGSVORRICHTUNG FÜR UNTER HOHEM DRUCK STEHENDE LEITUNGEN
METHOD FOR CONNECTING PIPES FOR HIGH PRESSURE FLUIDS

(30) Priorité: 05.09.2002 FR 0210981
(43) Date de publication de la demande: 01.06.2005
(73) Titulaire: Legris SAS, 35000 Rennes (FR)
(72) Inventeur: LE QUERE, Philippe, F-35830 BETTON (FR)
(74) Mandataire: Lavialle, Bruno François Stéphane
(86) Numéro de dépôt international: PCT/FR2003/002598
(87) Numéro de publication internationale: WO 2004/023013

(56) Documents cités:
- EP-A- 0 615 089
- EP-A- 0 762 036
- DE-A- 19 932 307
- DE-C- 10 125 499
- US-A- 5 655 796

## Description

La présente invention concerne des moyens pour la connexion de conduits d'éléments de circuit de transport de fluides en particulier à hautes pressions. Ces éléments peuvent être une canalisation, un organe émetteur de fluide tel qu'une pompe ou un organe récepteur de fluide tel qu'un réservoir.

On connaît des dispositifs de connexion (voir par exemple le document DE 10125499) comprenant un raccord qui est destiné à être monté sur un premier élément d'un circuit de transport de fluide et qui délimite un canal interne dont un premier tronçon d'extrémité est en communication avec le conduit de l'élément de circuit et un deuxième tronçon d'extrémité, opposé, est agencé pour recevoir un embout solidaire d'un deuxième élément de circuit comme une canalisation. Le deuxième tronçon d'extrémité est pourvu de moyens pour y retenir de façon étanche l'embout, ces moyens comprenant un élément de retenue de forme annulaire radialement et élastiquement déformable qui possède au repos un diamètre interne au plus égal à un diamètre externe de l'embout et qui est reçu dans une gorge du deuxième tronçon d'extrémité. La gorge comporte du côté de l'ouverture d'introduction de l'embout dans le deuxième tronçon d'extrémité un flanc tronconique et du côté opposé un flanc radial qui sont espacés l'un de l'autre de telle manière que l'élément de retenue est mobile axialement entre une position proche du flanc radial dans laquelle il peut subir une expansion radiale pour laisser passer l'embout lors de l'introduction de celui-ci dans le raccord et une position rapprochée de l'ouverture dans laquelle le flanc tronconique forme un moyen de rétreint de l'élément de retenue sur l'embout lorsqu'un effort d'extraction est exercé sur celui-ci.

Ce mode de retenue procure une résistance à l'arrachement importante même lorsque la pression du fluide circulant dans le circuit est élevée. Toutefois, lors de la mise sous pression du circuit, l'embout recule jusqu'à ce que l'élément de retenue arrive dans sa position rapprochée de l'ouverture. Des variations de pression successives tendent à engendrer des mouvements alternatifs de l'embout (pistonnage) favorisant la création de fuites et un suintement du raccord. En outre, le recul de l'embout présente l'inconvénient de former une zone de rétention de fluide entre la face terminale de l'embout et l'épaulement interne du raccord formant la butée à l'enfoncement de l'embout dans le raccord.

Il serait donc intéressant de disposer d'un moyen permettant de limiter le recul de l'embout par rapport au raccord.

Selon l'invention, on prévoit des moyens de connexion comprenant un raccord délimitant un canal interne dont un tronçon d'extrémité possède une ouverture d'introduction d'un embout et est pourvu de moyens pour y retenir de façon étanche l'embout, ces moyens comportant un élément d'étanchéité annulaire qui est axialement compressible et qui est monté dans le raccord pour avoir une face servant d'appui à un face terminale de l'embout et un élément de retenue de forme annulaire qui est radialement et élastiquement déformable qui est reçu dans une gorge interne du tronçon d'extrémité pour avoir une partie circonférentielle interne en saillie par une ouverture de la gorge externe pour être reçue dans une gorge externe de l'embout, la gorge interne comportant du côté de l'ouverture du tronçon d'extrémité un flanc tronconique concave formant un moyen de rétreint de l'élément de retenue, et d'un côté opposé à l'ouverture un flanc tronconique convexe qui est espacé du flanc tronconique concave d'une distance telle que l'élément de retenue est reçu avec jeu dans la gorge interne, et la face terminale de l'embout et la gorge externe de celui-ci étant séparées d'une distance légèrement supérieure à celle séparant la face de l'élément d'étanchéité et l'ouverture de la gorge interne du raccord.

Ainsi, lors de l'introduction de l'embout dans le raccord, l'embout pousse l'élément de retenue annulaire contre le flanc tronconique convexe qui tend à maintenir l'élément de retenue au plus près du flanc tronconique concave tout en permettant l'expansion radiale élastique de l'élément de retenue. Ainsi, dès que la gorge externe de l'embout arrive en regard de l'ouverture de la gorge interne du raccord, l'élément de retenue revient dans son état de repos et sa partie circonférentielle interne vient en saillie dans la gorge externe de l'embout. Du fait de la différence de distance entre les gorges, la face de l'élément d'étanchéité et la face terminale de l'embout, l'élément d'étanchéité est comprimé et repousse l'embout de telle manière que l'élément de retenue est serré entre le flanc tronconique concave de la gorge interne du raccord et le flanc opposé de la gorge externe de l'embout. Le recul de l'embout est donc limité.

Selon un mode de réalisation particulier, la gorge externe de l'embout a du côté d'une face terminale de l'embout un flanc tronconique convexe formant avec le flanc tronconique concave de la gorge interne du raccord un angle ouvert en direction de l'ouverture d'introduction, l'angle précité étant de préférence d'environ 10°.

Une retenue particulièrement efficace de l'embout dans le raccord est alors obtenue. En particulier, le fait que la gorge externe de l'embout ait, en vis-à-vis du flanc tronconique concave de la gorge interne du raccord, un flanc tronconique convexe ayant un angle supérieur à celui du flanc tronconique concave de la gorge interne du raccord favorise la fermeture de l'élément de retenue dans la gorge externe de l'embout.

Selon une caractéristique préférentielle, l'élément de retenue est un jonc fendu ayant des extrémités biseautées d'un côté intérieur du jonc.

Le risque que le jonc raie la surface externe de l'embout lors de l'introduction de ce dernier dans le raccord est ainsi limité.

D'autres caractéristiques et avantages de l'invention ressortiront à la lecture de la description qui suit d'un mode de réalisation particulier non limitatif de l'invention.

Il sera fait référence aux dessins annexés, parmi lesquels :

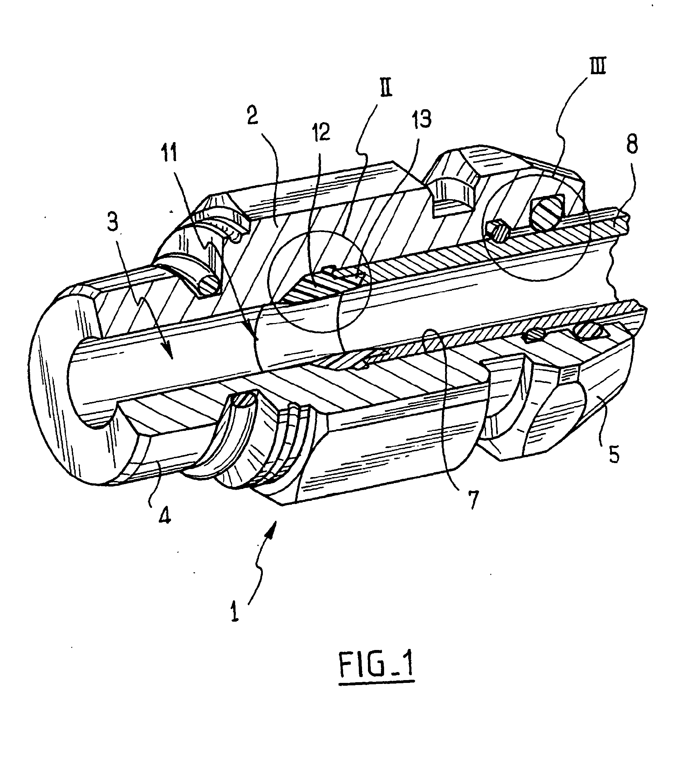

- la figure 1 est une vue en perspective avec écorché des moyens de connexion conformes à l'invention,

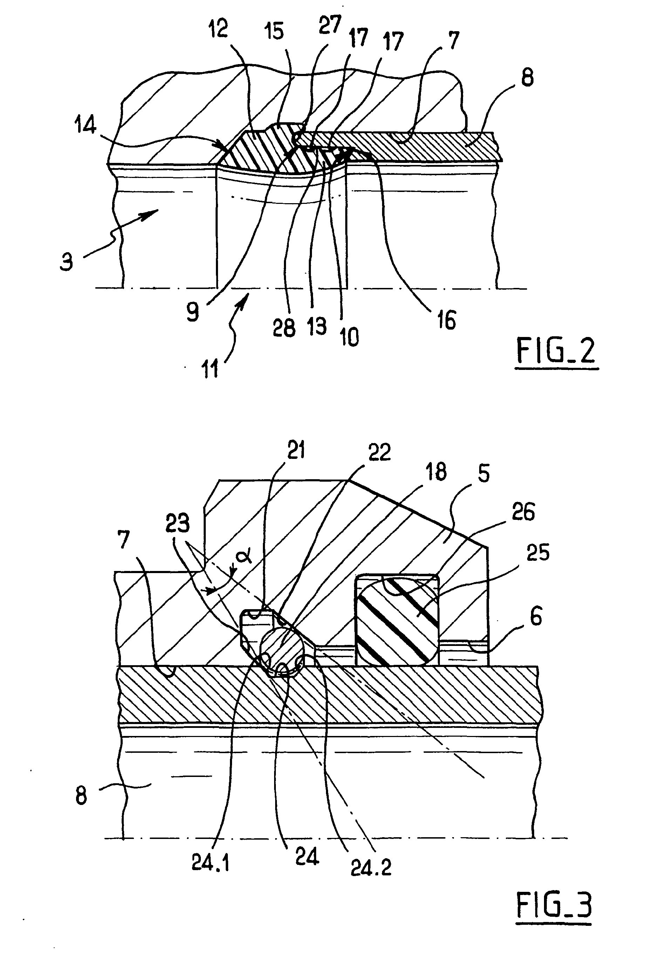

- la figure 2 est une vue agrandie en coupe longitudinale de la zone référencée II sur la figure 1,
- la figure 3 est une vue agrandie en coupe longitudinale de la zone référencée III sur la figure 1,
- la figure 4 est une vue analogue à la figure 3 illustrant l'utilisation d'un outil de déconnexion avec les moyens de connexion de l'invention,
- la figure 5 est une vue des extrémités adjacentes du jonc mis en oeuvre dans l'invention.

Les moyens de connexion conformes à l'invention, qui sont décrits ici, sont destinés à être implantés dans un circuit hydraulique pour raccorder une canalisation à un conduit interne d'un organe de ce circuit.

En référence aux figures, les moyens de connexion conformes à l'invention comprennent un raccord généralement désigné par 1 comportant un corps 2 tubulaire qui délimite un canal interne 3 et qui possède une extrémité 4, ici filetée pour être vissée dans un taraudage formé à une extrémité du conduit interne de l'organe, et une extrémité 5 au niveau de laquelle le canal interne 3 débouche par une ouverture 6 par laquelle un embout 8 est destiné à être introduit dans un tronçon d'extrémité 7 du canal interne 3.

L'embout 8 est de forme tubulaire et a un diamètre externe légèrement inférieur au diamètre interne du tronçon d'extrémité 7. L'embout 8 possède un chambrage d'extrémité 9 ayant une surface interne 28 s'évasant en direction de la face frontale de l'embout depuis un fond délimité par une surface tronconique convexe formant un épaulement 10. L'embout 8 possède à l'opposé du chambrage d'extrémité 9 une extrémité non visible sur les figures, agencée pour être montée sur une extrémité de la canalisation.

Le canal interne 3 du corps 2 est pourvu de moyens pour y retenir de façon étanche l'embout 8.

Les moyens de retenue étanche comprennent un élément d'étanchéité généralement désigné en 11 de forme annulaire reçu dans un logement ménagé au fond du tronçon d'extrémité 7 du canal interne 3.

L'élément d'étanchéité 11 comporte une couronne 12 de liaison au logement. La couronne 12 possède une face radiale en saillie axiale de laquelle s'étend un manchon terminal 13 et, à l'opposé du manchon terminal 13, une portion annulaire 14 biseautée extérieurement qui est appliquée contre une surface de forme correspondante du logement.

La couronne 12 comporte des moyens de son clipsage dans le logement. Ces moyens sont ici formés par un bourrelet annulaire 15 s'étendant en saillie externe radiale de la couronne 12 dans une cavité annulaire du logement.

Le manchon terminal 13 a un diamètre externe compris entre le diamètre interne minimal et le diamètre interne maximal du chambrage 9 et une longueur légèrement supérieure à la longueur du chambrage 9. Le manchon terminal 13 possède une face d'extrémité 16 tronconique concave pour coopérer avec l'épaulement interne 10 et est pourvu extérieurement de gorges 17.

La face radiale de la couronne 12 en saillie de laquelle s'étend le manchon terminal 13 comporte une gorge plane 27 qui entoure le manchon terminal 13 pour recevoir l'extrémité de l'embout 8.

L'élément d'étanchéité 11 est par exemple en thermoplastique élastomère de type polyuréthanne TPU ou élastomère de type acrylonitrile butadiène (NBR), éventuellement chargé de fibres de renfort comme des fibres de verre.

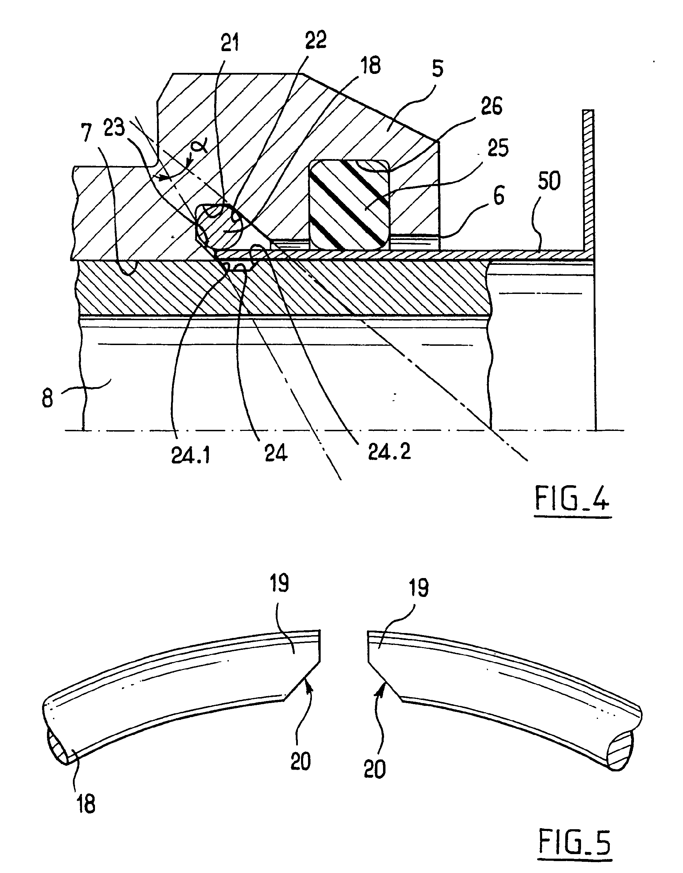

Les moyens de retenue étanche comportent en outre un jonc fendu 18 ayant des extrémités 19 pourvues d'un biseau 20 d'un côté intérieur du jonc (voir figure 5). Le jonc est radialement et élastiquement déformable et possède au repos un diamètre interne au plus égal au diamètre externe de l'embout 8.

Le jonc 18 est reçu dans une gorge 21 du tronçon d'extrémité 7. La gorge 21 comporte du côté de l'ouverture 6 un flanc tronconique concave 22 et, d'un côté opposé à l'ouverture 6, un flanc tronconique convexe 23. Les flancs 22 et 23 de la gorge 21 sont espacés d'une distance légèrement supérieure au diamètre du jonc 18 de manière à recevoir celui-ci avec jeu entre eux et forment un angle d'environ 40° avec l'axe central du tronçon d'extrémité 7.

Le jonc 18 est destiné à être reçu dans une gorge externe 24 de l'embout 8 au niveau de sa partie circonférentielle interne, le diamètre interne du jonc 18 au repos étant ici inférieur au diamètre externe de l'embout 8. La gorge externe 24 est délimitée latéralement par des flancs 24.1, 24.2 dont au moins le flanc 24.1 qui est situé du côté de la face terminale de l'embout 8 et qui est donc opposé à l'ouverture forme un angle de 50° environ avec un axe central de l'embout 8.

Les moyens de retenue étanche comprennent également un joint torique 25 reçu dans une gorge 26 ménagée dans le tronçon d'extrémité à proximité de l'ouverture 6. Le joint torique 25 a un diamètre interne légèrement inférieur au diamètre externe de l'embout 8.

Pour connecter la canalisation équipée de l'embout 8 à l'organe équipé du raccord 1, l'embout 8 est introduit dans le tronçon d'extrémité 7 du canal interne 3 par l'ouverture 6.

L'embout 8 est inséré à force dans le joint torique 25 et pousse le jonc 18 contre le flanc 23 de la gorge 21. Le flanc 23 tend à écarter le jonc 18, ce qui facilite le passage de l'embout 8 dans celui-ci.

Le manchon terminal 13 de l'élément d'étanchéité 11 pénètre dans le chambrage d'extrémité 9 de l'embout 8 jusqu'à ce que la face d'extrémité 16 du manchon terminal 13 arrive en butée contre l'épaulement interne 10 de l'embout 8 et la face d'extrémité de l'embout 8 soit en appui contre la couronne 12. Le jonc 18 est alors reçu dans la gorge externe 24 de l'embout 8 et l'élément d'étanchéité 12 tend à repousser l'embout 8 de sorte que le flanc de la gorge externe 24 opposé à l'ouverture 6 repousse le jonc 18 contre le flanc 22 de la gorge 21. On notera que la distance entre la gorge 24 et la face terminale de l'embout 8 est légèrement supérieure à la distance entre le fond de la gorge plane 27 et l'ouverture de la gorge 21. Il en résulte que la différence entre, d'une part, la distance entre la face terminale de l'embout 8 et le point de contact du jonc 18 avec le flanc 24.1 et, d'autre part, la distance entre le fond de la gorge plane 27 et le point de contact du jonc 18 avec le flanc 22 est telle que la couronne 12 est comprimée axialement lorsque le jonc 18 est reçu dans la gorge 24, ce qui maintient le jonc 18 en contact avec les flancs 24.1 et 22. Le flanc 22 exerce alors un effort de rétreint sur le jonc 18 qui se referme dans la gorge. La coopération dudit flanc de la gorge externe 24, du jonc 18 et du flanc 22 s'oppose à l'extraction de l'embout 8 hors du raccord 1. Ainsi, du côté de la face terminale de l'embout 8, le flanc tronconique convexe 24.1 de la gorge externe 24 de l'embout 8 forme avec le flanc tronconique concave 22 de la gorge interne 21 du raccord 1 un angle α ouvert d'environ 10° en direction de l'ouverture d'introduction 6 (c'est-à-dire que le sommet de cet angle α est du côté de l'élément d'étanchéité 11) qui favorise une fermeture ou un rétreint du jonc 18 dans la gorge externe 24 lorsqu'un effort d'extraction est exercé sur l'embout 8.

Le fait que le manchon terminal 13 comme la couronne 12 soient légèrement comprimés augmente l'effort de contact entre la face d'extrémité 16 et l'épaulement interne 10. Du fait notamment des formes tronconiques correspondantes de la face d'extrémité 16 et de l'épaulement interne 10, le risque que la face d'extrémité 16 échappe à son appui contre l'épaulement interne 10 est faible et la surface externe du manchon terminal 13 est plaquée contre la surface interne du chambrage d'extrémité 9. La surface interne 28 exerce, de par sa forme et ses dimensions, un effort de précontrainte sur le manchon terminal 13 qui est forcé en appui contre cette surface. En outre, la coopération des formes tronconiques de l'épaulement interne 10 et de la face d'extrémité 16 associée à l'effort de compression favorise une déformation en tonneau du manchon terminal 13 qui plaque le manchon interne 13 contre la surface interne 28.

L'extrémité de l'embout 8 est reçue dans la gorge plane 27. La gorge plane 27 divise la face radiale de la couronne 12 en une portion annulaire intérieure (prolongée par le manchon terminal 13) et une portion annulaire extérieure qui viennent enchâsser l'extrémité de l'embout 8 assurant ainsi le maintien en position de l'élément d'étanchéité 11. Cette gorge plane 27 s'étend sensiblement à l'aplomb du bourrelet 15 de sorte que l'insertion de l'embout 8 dans la gorge plane 27 tend à soutenir la couronne 12 et s'oppose ainsi à un échappement du bourrelet 15 hors de la cavité annulaire du logement.

Lors de la mise sous pression du circuit, le fluide tend à appliquer la portion biseautée 14 contre la surface attenante du logement et le manchon terminal 13 contre la surface interne 28, ce qui renforce l'étanchéité.

On notera que l'inclinaison des flancs 24.1 et 22 permet en outre d'éviter un matage de ces surfaces

Pour déconnecter l'embout 8 du raccord 1, il est possible d'utiliser un outil 50 formé d'une douille fendue longitudinalement pour permettre sa mise en place latéralement sur l'embout 8. La douille comporte une extrémité agencée pour être glissée entre la surface externe de l'embout 8 et la surface interne de la portion du tronçon d'extrémité 7 s'étendant entre l'ouverture 6 et le flanc 22 afin d'être introduite dans le jonc 18 et/ou de repousser le jonc 18 contre le flanc 23 et, à l'opposé, une extrémité pourvue extérieurement d'une collerette permettant d'enfoncer la douille dans le raccord.

Simultanément à l'enfoncement de l'outil 50, un effort de traction est opéré sur l'embout 8.

Bien entendu, l'invention n'est pas limitée au mode de réalisation décrit mais englobe également les variantes de réalisation entrant dans le cadre de l'invention tel que définies dans les revendications.

En particulier, l'embout peut être rapporté sur une extrémité de canalisation comme dans le mode de réalisation décrit ou l'embout peut être formé par l'extrémité de canalisation agencée en conséquence.

En variante, la face terminale du manchon terminal 13 et l'épaulement 10 du chambrage d'extrémité 9 peuvent également être formés de faces annulaires radiales. Le manchon terminal 13 peut en outre avoir une longueur inférieure à celle du chambrage d'extrémité 9 de l'embout 8 de telle manière que l'étanchéité du raccordement n'est assuré que par le contact de la surface externe du manchon terminal 13 avec la surface interne du chambrage d'extrémité 9.

L'élément d'étanchéité peut avoir une configuration différente de celle décrite et par exemple être dépourvu de manchon terminal 13. Par ailleurs, l'embout 8 peut ne pas comprendre de chambrage d'extrémité 9 ou avoir un chambrage d'extrémité 9 ayant une surface interne cylindrique ou tout autre forme de révolution.

## Revendications

1. Moyens de connexion comprenant un raccord (1) délimitant un canal interne (3) dont un tronçon d'extrémité (7) possède une ouverture d'introduction (6) d'un embout (8) et est pourvu de moyens pour y retenir de façon étanche l'embout, ces moyens comportant un élément d'étanchéité (11) annulaire qui est axialement compressible et qui est monté dans le raccord pour avoir une face servant d'appui à une face terminale de l'embout et un élément de retenue (18) de forme annulaire qui est radialement et élastiquement déformable qui est reçu dans une gorge interne (21) du tronçon d'extrémité pour avoir une partie circonférentielle interne en saillie par une ouverture de la gorge interne pour être reçue dans une gorge externe (24) de l'embout, **caractérisés en ce que** la gorge interne comporte du côté de l'ouverture du tronçon d'extrémité un flanc tronconique concave (22) formant un moyen de rétreint de l'élément de retenue, et d'un côté opposé à l'ouverture un flanc tronconique convexe (23) qui est espacé du flanc tronconique concave d'une distance telle que l'élément de retenue est reçu avec jeu dans la gorge interne, et **en ce que** la face terminale de l'embout et la gorge externe de celui-ci sont séparées d'une distance légèrement supérieure à celle séparant la face de l'élément d'étanchéité et l'ouverture de la gorge interne du raccord.

2. Moyens de connexion selon la revendication 1, **caractérisés en ce que** la gorge externe (24) de l'embout (8) a du côté d'une face terminale de l'embout (8) un flanc tronconique convexe formant avec le flanc tronconique concave de la gorge interne du raccord (1) un angle ouvert en direction de l'ouverture d'introduction.

3. Moyens de connexion selon la revendication 2, **caractérisés en ce que** l'angle précité est d'environ 10°.

4. Moyens selon l'une quelconque des revendications 1 à 3, **caractérisés en ce que** l'élément de retenue est un jonc fendu (18) ayant des extrémités (19) biseautée d'un côté intérieur du jonc.

## Claims

1. Connection means comprising a coupling (1) defining an internal channel (3) having an end segment (7) possessing an insertion opening (6) for insertion of an endpiece (8) and provided with means for retaining the endpiece in leaktight manner therein, said means comprising an annular sealing element (11) that is axially compressible and that is mounted in the coupling to have one face serving as a bearing surface for a terminal face of the endpiece, and an annularly-shaped retaining element (18) that is elastically deformable in a radial direction and that is received in an inner groove (21) of the end segment in order to have an inner circumferential portion projecting through an opening of the inner groove so as to be received in an outer groove (24) of the endpiece, the connection means being **characterized in that** the inner groove has a concave frustoconical flank (22) beside the opening of the end segment to form means for shrinking the retaining element, and a convex frustoconical flank (23) on its side remote from the opening, which flank is spaced apart from the concave frustoconical flank by a distance such that the retaining element is received with clearance in the inner groove, and **in that** the terminal face of the endpiece and the outer groove thereof are spaced apart by a distance slightly greater than the distance between the face of the sealing element and the opening of the inner groove of the coupling.

2. Connection means according to claim 1, **characterized in that** the outer groove (24) of the endpiece (8) has a convex frustoconical flank beside a terminal face of the endpiece (8), said flank co-operating with the concave frustoconical flank of the inner groove of the coupling (1) to form an angle that is open towards the insertion opening.

3. Connection means according to claim 2, **characterized in that** the above-specified angle is about 10°.

4. Means according to any one of claims 1 to 3, **characterized in that** the retaining element is a split ring (18) having chamfer-shaped ends (19) on the inside of the split ring.

## Patentansprüche

1. Verbindungsvorrichtung, umfassend ein Verbindungsstück (1), das einen Innenkanal (3) begrenzt, von dem ein Endabschnitt (7) eine Einführöffnung (6) zum Einführen eines Rohrendes (8) hat und mit Mitteln versehen ist, um das Rohrende dort auf dichte Weise zu halten, wobei diese Mittel ein ringförmiges Dichtungselement (11) umfassen, das axial zusammengedrückt werden kann und derart in dem Verbindungsstück montiert ist, dass es eine Fläche aufweist, die als Anlage für eine Endfläche des Rohrendes dient, sowie ein ringförmiges Rückhalteelement (18), das radial und elastisch verformbar und in einer Innennut (21) des Endabschnittes derart aufgenommen ist, dass es einen inneren Umfangsabschnitt hat, der aus einer Öffnung der Innennut vorsteht, um in einer Außennut (24) des Rohrendes aufgenommen zu werden, **dadurch gekennzeichnet, dass** die Innennut auf der Seite der Öffnung des Endabschnittes eine konkave kegelstumpfförmige Flanke (22) hat, die Mittel zur Querschnittsverminderung des Rückhalteelements bildet, und auf einer der Öffnung entgegengesetzten Seite eine konvexe kegelstumpfförmige Flanke (23), die zur konkaven kegelstumpfförmigen Flanke einen solchen Abstand hat, dass das Rückhalteelement mit Spiel in der Innennut aufgenommen ist, und dass die Endfläche des Rohrendes und dessen Außennut einen Abstand zueinander haben, der geringfügig größer ist als der, der die Stirnfläche des Dichtungselements von der Öffnung der Innennut des Verbindungsstückes trennt.

2. Verbindungsvorrichtung nach Anspruch 1, **dadurch gekennzeichnet, dass** die Außennut (24) des Rohrendes (8) auf der Seite einer Endfläche des Rohrendes (8) eine konvexe kegelstumpfförmige Flanke hat, die mit der konkaven kegelstumpfförmigen Flanke der Innennut des Verbindungsstückes (1) einen in Richtung der Einführöffnung offenen Winkel bildet.

3. Verbindungsvorrichtung nach Anspruch 2, **dadurch gekennzeichnet, dass** der vorgenannte Winkel etwa 10° beträgt.

4. Vorrichtung nach einem der Ansprüche 1 bis 3, **dadurch gekennzeichnet, dass** das Rückhalteelement ein geschlitzter Ring (18) ist, der auf seiner Innenseite abgeschrägte Enden (19) hat.
